# EUROPEAN PATENT APPLICATION

(11) **EP 4 715 386 A1**
(43) Date of publication of application: **25.03.2026**
(21) Application number: 24810927.4
(22) Date of filing: 10.05.2024
(51) Int. Cl.: G01N 35/00, G01N 35/02

(54) **AUTOMATIC ANALYSIS DEVICE**

(30) Priority: 19.05.2023 JP 2023082733
(71) Applicant: HITACHI HIGH-TECH CORPORATION, Tokyo 105-6409 (JP)
(72) Inventor: WATANABE Yutaka, Tokyo 105-6409 (JP); MATSUOKA Shinya, Tokyo 105-6409 (JP)
(74) Representative: MERH-IP Matias Erny Reichl Hoffmann Patentanwälte PartG mbB
(86) International application number: PCT/JP2024/017465
(87) International publication number: WO 2024/241919

(57) **Abstract**

A consumable storage vessel mount section has a first position and a second position. A consumable stored in a consumable storage vessel at the first position is used for a sample analysis. When the consumable storage vessel at the first position has been used, the consumable storage vessel at the second position is transferred to the first position. If it is determined that the consumable stored in the consumable storage vessel at the second position is unusable, the determination is made before starting the sample analysis whether it is possible to perform the sample analysis by using only the consumable stored in the consumable storage vessel at the first position, or it is necessary to use the consumables stored in the consumable storage vessels at the first and the second positions for performing the sample analysis. Hence, an interruption of an analysis that has been started using a first consumable resulting from unavailability of a second consumable owing to the validity term of the consumable in a standby state is avoided.

## Description

### Technical Field

The present invention relates to an automatic analyzer for performing quantitative or qualitative analysis of biological samples such as blood and urine, and particularly to the automatic analyzer that uses consumables such as reaction vessels in the analysis.

### Background Art

In an automatic analyzer, in the analysis of blood or urine (hereinafter referred to as "sample"), a consumable reaction vessel is used as a container for reacting the sample with a reagent in some cases. The reaction vessel is disposable and is disposed of after a single use in an analysis, without being reused. Generally, the reaction vessel is used in such a manner that, in a state in which a predetermined number of reaction vessels are stored in a storage vessel (reaction vessel tray), the reaction vessels are placed in the analyzer, and the reaction vessels used in an analysis are transported by a gripper mechanism or the like to a sample dispensing position or a reagent dispensing position. For the purpose of managing the expiration date of the reaction vessels, some reaction vessel trays are provided with an identifier (RFID or barcode) incorporating expiration date information. Furthermore, a single reaction vessel is not necessarily used for one analysis; in some cases, two or more reaction vessels are used at predetermined time intervals during one analysis.

The reaction vessel is an essential consumable for analysis, and if no usable reaction vessel remains, the analysis cannot be performed. Patent Literature 1 discloses the automatic analyzer that can store a plurality (for example, two) of consumable storage vessels, determines the usage status of each consumable storage vessel and determines which consumable storage container should be given priority for use.

### Citation List

### Patent Literature

Patent Literature 1: International Publication No. 2020/044790

### Summary of Invention

### Technical Problem

In Patent Literature 1, the usage priority of consumable storage vessels is determined based on the state of the consumable storage vessels and consumables in the automatic analyzer, such as by determining whether the consumable storage vessel is in use or unused depending on whether consumables have been taken out from it, or determining whether the consumable storage vessel is newer or older based on when it was mounted in the automatic analyzer. There is no disclosure regarding determination based on information such as expiration dates derived from identifiers attached to the consumable storage vessels. In order to properly analyze the sample, it is desirable to control the use so that expired consumables are not used.

In particular, when two or more reaction vessels are used in a single analysis, it is possible that the first reaction vessel is obtained from a reaction vessel tray placed at the first consumable storage vessel mount location (use position), and the second reaction vessel is obtained from a tray placed at the second consumable storage vessel mount location (standby position). In such a case, if the reaction vessel tray placed at the second consumable storage vessel mount location is determined to have exceeded its expiration date, the analysis that was started using the first reaction vessel must be interrupted because the second reaction vessel cannot be used.

The present invention has been conceived in view of the above problem, and aims to avoid interruption of the analysis that has been started using the first reaction vessel, even if a consumable in standby is unusable due to expiration or other reasons, and the second reaction vessel cannot be used.

### Solution to Problem

An automatic analyzer according to an embodiment of the present invention includes an analysis section for analyzing a sample using a consumable; and a control section for controlling a sample analysis performed by the analysis section, in which: the consumable is held in a consumable storage vessel mount section of the analysis section while being stored in a consumable storage vessel attached with an identifier; the consumable storage vessel mount section includes a first position and a second position, the consumable stored in the consumable storage vessel at the first position is used for the sample analysis, and when the consumable storage vessel at the first position has been used, the consumable storage vessel at the second position is transferred to the first position; the consumable storage vessel mount section includes an identification section for identifying the identifier attached to the consumable storage vessel at the second position; and when it is determined that the consumable stored in the consumable storage vessel at the second position is unusable based on an identification made by the identification section, the control section determines before starting the sample analysis whether it is possible to perform the sample analysis by using only the consumable stored in the consumable storage vessel at the first position, or it is necessary to use the consumables stored in the consumable storage vessels at the first and the second positions for performing the sample analysis.

### Advantageous Effects of Invention

It is possible to avoid interruption of an analysis that has been started using a first consumable resulting from unavailability of a second consumable owing to the validity term of the consumable in a standby state. Other problems and novel features will become apparent from the description of this specification and the accompanying drawings.

### Brief Description of Drawings

[FIG. 1] FIG. 1 schematically illustrates a basic structure of an automatic analyzer.
[FIG. 2] FIG. 2 schematically illustrates a structure of a sample introduction section.
[FIG. 3A] FIG. 3A schematically illustrates a position 1 of an injection valve.
[FIG. 3B] FIG. 3B schematically illustrates a position 2 of the injection valve.
[FIG. 4] FIG. 4 schematically illustrates a structure of a reaction vessel tray mount section.
[FIG. 5] FIG. 5 is an explanatory view of a reaction vessel tray replacement process.
[FIG. 6] FIG. 6 represents a flowchart of operations of a control section when replacing the reaction vessel tray. Description of Embodiments

Embodiments of the present invention will be described below with reference to the drawings. It should be noted that, throughout the description, descriptions of identical components in the drawings may be omitted. Here, as an example, an automatic analyzer is described that performs pretreatment by reacting a sample with a reagent and separating components using magnetic beads, then separates the components of the pretreated sample using liquid chromatography (LC), and finally analyzes the mass of the ionized sample.

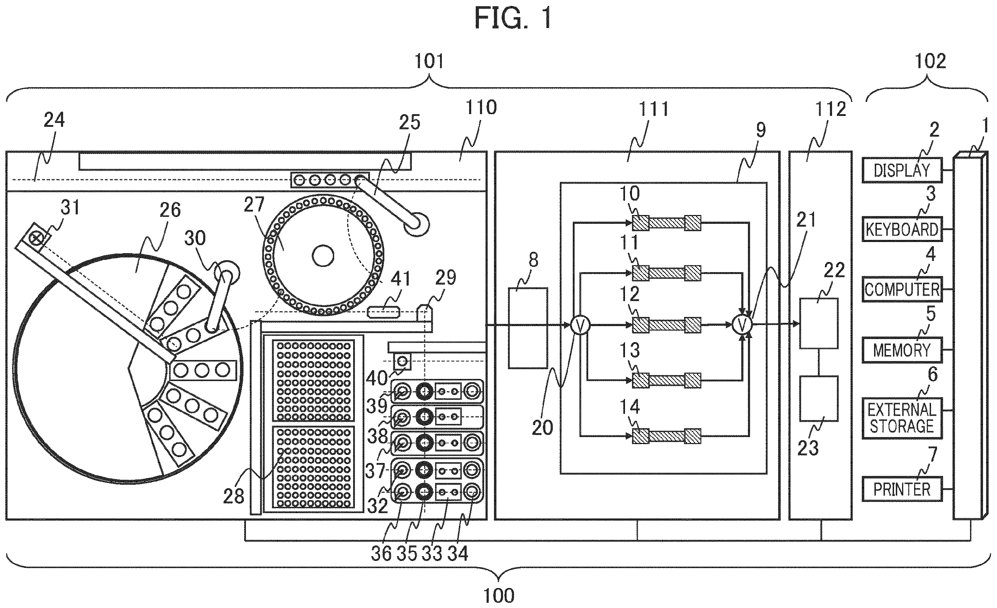

FIG. 1 schematically illustrates a basic structure of an automatic analyzer 100. The automatic analyzer 100 includes an analysis section 101 mainly comprising a preprocessing section 110, a separation section 111 and a detection section 112, and a control section 102 mainly comprising an interface 1, a display 2, a keyboard 3, a microcomputer 4, a memory 5, an external storage 6 and a printer 7.

The preprocessing section 110 serves to remove unnecessary substances other than the target analyte from a sub-sample dispensed from a parent sample using a reagent, magnetic beads (hydrophobic interaction), and an extraction solvent, and to introduce the sample into the separation section. The preprocessing section 110 mainly comprises a transport line 24, a sample dispensing mechanism 25, a reagent disk 26, an incubator 27, a reaction vessel tray mount section (consumable storage vessel mounting section) 28, a transport mechanism 29, a reagent dispensing mechanism 30, a magnetic particle stirring mechanism 31, a cleaning unit 32, an elution unit 37, a supernatant separation unit 38, a liquid property regulation unit 39, an LC transfer mechanism 40 and a reaction vessel disposal section 41. Each of the cleaning unit 32, the elution unit 37, the supernatant separation unit 38 and the liquid property regulation unit 39 is combined with a cleaning liquid nozzle 33, a chamber 34, a magnetic separator 35 and a mixer 36.

The transport line 24 transports racks holding a plurality of sample containers each containing a sample to the sample dispensing position or the like. The sample dispensing mechanism 25 aspirates the sample contained in the sample container located at the sample dispensing position using a nozzle, and dispenses it into the reaction vessel on the incubator 27. The incubator 27 is a disk that performs the reaction between the sample and reagent at a constant temperature, and promotes the reaction between the sample and reagent by maintaining the temperature at a predetermined level by means of a heater (not shown).

A plurality of reaction vessels can be held on the incubator 27, where the sample and reagent are mixed and reacted. The reaction vessels are stored in a reaction vessel tray (consumable storage container), which is mounted on the reaction vessel tray mount section 28. The configuration of the reaction vessel tray mount section 28 will be described later. The reaction vessels are configured to be disposable. The transport mechanism 29 transports unused reaction vessels from the reaction vessel tray mount section 28 to the incubator 27, and transports used reaction vessels to the reaction vessel disposal section 41 for disposal. It should be noted that the destinations to which the transport mechanism 29 transports the reaction vessels are not limited to the incubator 27, but also include the magnetic separator 35, the mixer 36 and the LC transfer mechanism 40.

The reagent disk 26 stores reagent containers that hold reagents used for magnetic particles, sample pretreatment and analysis, and is refrigerated to prevent degradation of the reagents. The reagent dispensing mechanism 30 aspirates the reagent stored in the reagent container in the reagent disk 26 using a nozzle, and dispenses it into the reaction vessel on the incubator 27. The magnetic particle stirring mechanism 31 stirs the magnetic particle solution among the reagents in the reagent disk 26.

The cleaning unit 32, the elution unit 37, the supernatant separation unit 38 and the liquid property regulation unit 39 will be described. First, the components that constitute these units will be described. In the following, the case of the cleaning unit 32 will be described as an example; in other units, a liquid suitable for the intended use is supplied to the chamber 34, and processing is performed. The cleaning liquid used in the cleaning unit 32 is a liquid for removing contaminants other than the substances (measuring target analytes) bound to the magnetic beads.

The chamber 34 is a container for mixing cleaning liquids supplied from a cleaning liquid storage (not shown) via a cleaning liquid supply mechanism (not shown). Multiple types of cleaning liquid are available, and they are mixed and used depending on the type of contaminants.

The cleaning liquid nozzle 33 is composed of two nozzles: an aspiration nozzle and a discharge nozzle, and is capable of both discharging the used liquid and supplying the cleaning liquid. The cleaning liquid supplied to the chamber 34 is dispensed into the reaction vessel via the cleaning liquid discharge nozzle.

The mixer 36 stirs the liquid (a mixture of cleaning liquid and sample) in the reaction vessel by a rotational operation.

The magnetic separator 35 performs magnetic separation processing on the reaction vessel into which the magnetic particle solution and the cleaning liquid have been dispensed. After a certain period of time and upon completion of the magnetic separation, the used cleaning liquid is discharged via the cleaning liquid aspiration nozzle, thereby removing contaminants.

In the cleaning unit 32, biological-sample-derived contaminants remaining in the mixed solution of the sample, reagent, and magnetic beads are removed while the magnetic beads and the substances bound to them are immobilized by the magnetic separator 35.

In the elution unit 37, an organic solvent is discharged into a reaction vessel in which the magnetic beads have been cleaned by the cleaning unit 32, to elute the measuring target analyte that was adsorbed onto the magnetic particles.

In the supernatant separation unit 38, the separated measuring target analyte (eluted in the elution unit 37) is dispensed into a new reaction vessel transported by the transport mechanism 29.

In the liquid property regulation unit 39, a diluent or the like is dispensed and stirred in order to regulate the liquid properties of the separated measuring target analyte into a condition suitable for separation by liquid chromatography.

As a result, the sample that has undergone a series of pretreatment steps (the separated measuring target analyte) is transferred by the LC transfer mechanism 40 from the preprocessing section 110 to the separation section 111.

The separation section 111 serves to perform component separation by conducting liquid chromatography on the sample purified in the preprocessing section 110. The separation section 111 mainly comprises a sample introduction section 8 and a column oven 9.

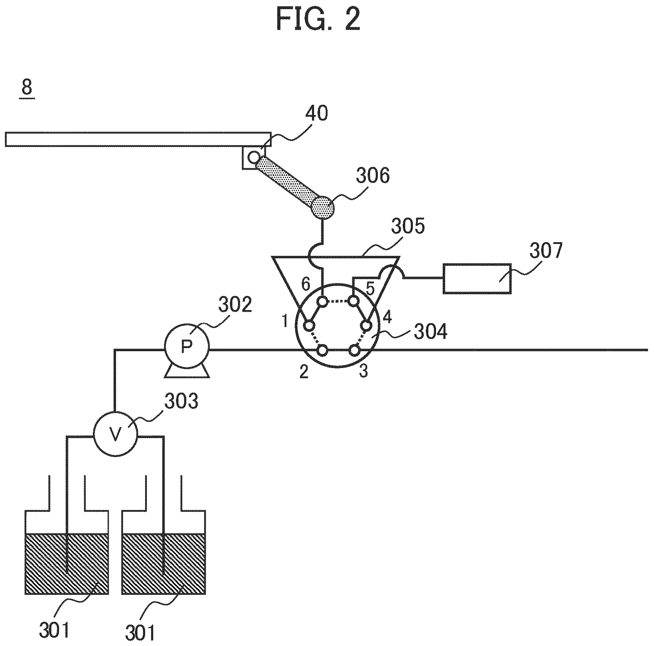

As shown in FIG. 2, the sample introduction section 8 includes a sample introduction solvent 301, a solvent feed pump 302 for delivering the sample introduction solvent 301, a solvent selector valve 303 for controlling the composition of the sample introduction solvent 301, an injection valve 304, a sample loop 305, a sipper 306 and a syringe 307 for aspirating a sample from a reaction vessel transported by the LC transfer mechanism 40 from the preprocessing section 110 and introducing it into the sample loop 305.

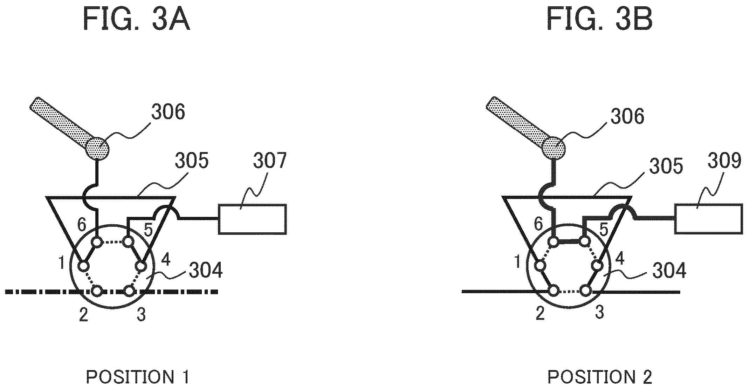

The injection valve 304 will be described with reference to FIGS. 3A and 3B. The injection valve 304 is a six-way valve, and can form two flow path patterns by switching the flow paths. In position 1 shown in FIG. 3A, the flow paths between port 1 and port 6, port 2 and port 3, and port 4 and port 5 are connected. In contrast, in position 2 shown in FIG. 3B, the flow paths between port 1 and port 2, port 3 and port 4, and port 5 and port 6 are connected.

During sample aspiration, the position of the injection valve 304 is controlled to position 1 (FIG. 3A), and the sipper 306, the sample loop 305 and the syringe 307 are connected. After the LC transfer mechanism 40 has transported the reaction vessel to a predetermined position, the sipper 306 descends, aspirates the sample from the reaction vessel, and fills the sample loop 305 with the sample. The aspiration speed of the sample by the syringe 307 is controlled by the microcomputer 4, and the optimal setting value can be used for each target analyte. At the same time, the sample introduction solvent 301, the solvent selector valve 303, the solvent feed pump 302 and a column selector valve 20 are connected, enabling the mobile phase to flow through the column.

During the introduction of the sample into the column, the position of the injection valve 304 is controlled to position 2 (FIG. 3B), and the sample introduction solvent 301, the solvent selector valve 303, the solvent feed pump 302, the sample loop 305 and the column selector valve 20 are connected, so that the sample can be introduced into the column along the flow of the mobile phase.

The column oven 9 houses columns 10 to 14 inside the oven for separating target analytes from interfering components, and performs temperature control of these columns. It also houses the column selector valves 20 and 21 outside the oven for optionally connecting any of the columns to the flow path, and is controlled by the microcomputer 4 of the control section 102 to select the column used for separation.

The detection section 112 serves to perform mass measurement/analysis on the sample from which the components has been separated in the separation section 111. The detection section 112 mainly comprises a detector 22 and an analog/digital converter 23.

The detection section 112 ionizes the sample separated by the separation section 111 and causes it to fly in a vacuum. The target analyte is separated according to their mass-to-charge ratio (m/z) by an electrical action of the flying ions and are detected by the detector 22. As a result, changes over time in the relative intensity of the target analyte can be obtained as detection peaks (mass spectrum).

The mass spectrum based on the target analyte obtained by the detector 22 is converted from an analog signal to a digital signal by the analog/digital converter 23, input to the microcomputer 4 via the interface 1, and converted into the concentration of the target component in the sample by a quantitative value calculation process using the area value of the detection peak. The data converted to concentration is output in printed form via the interface 1 through an output device such as the printer 7 or displayed on the screen of the display 2. The operation of the detector 22 is controlled by the microcomputer 4 of the control section 102.

A user can input various types of information using the display 2 and the keyboard 3. The measurement results of the analysis items can be displayed on output devices such as the printer 7 or the display 2. Information stored in the external storage 6 is read by a reader (not shown) and stored in the corresponding memory area of the memory 5 or the microcomputer 4. The information stored in the external storage 6 includes, for example, the following: That is, analysis item codes, parameters used for the analysis items, and so on. Among them, the parameters used for the analysis items include a pretreatment method, a separation method and a detection method. In addition to the information read from the external storage 6, the memory 5 stores operation conditions of each mechanical section of the automatic analyzer 100, analysis parameters for each analysis item, decision logic for managing each reagent and analysis results.

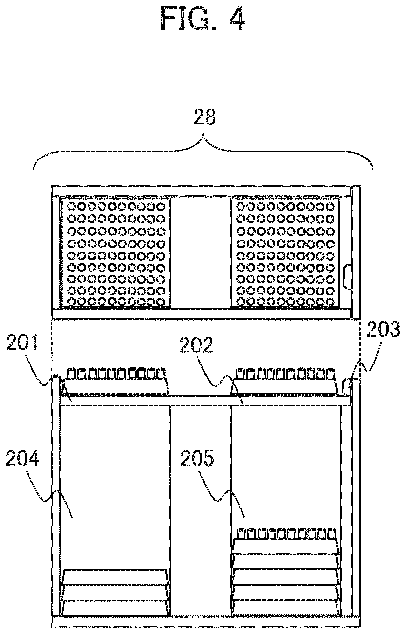

FIG. 4 illustrates a structure of the reaction vessel tray mount section 28 of the preprocessing section 110. As shown in FIG. 4, the reaction vessel tray mount section 28 includes a use position 201 (first position) for placing a reaction vessel tray in use and a standby position 202 (second position) for placing a standby reaction vessel tray. It further includes an identification section 203 for identifying an identifier attached to the standby reaction vessel tray placed at the standby position 202.

Here, the identifier may be optically readable, such as a barcode, or readable by radio waves, such as an RFID (IC tag or wireless tag), but any medium from which information can be read may be used. The identification section 203 may include a barcode reader that irradiates a barcode (1D or 2D) with a laser beam and detects the reflected light if the identifier is a barcode, or an RFID reader if the identifier is an RFID, but any device capable of reading the identifier information may be used.

In addition, a reaction vessel tray disposal section 204 is provided below the use position 201 for the disposal of used reaction vessel trays, and a reaction vessel tray supply section 205 is provided below the standby position 202 for storing unused reaction vessel trays. The reaction vessel tray mount section 28 includes a reaction vessel tray transfer mechanism (not shown), which can transfer: the reaction vessel tray at the use position 201 to the reaction vessel tray disposal section 204; the reaction vessel tray at the standby position 202 to the use position 201; and the reaction vessel tray at the reaction vessel tray supply section 205 to the standby position 202.

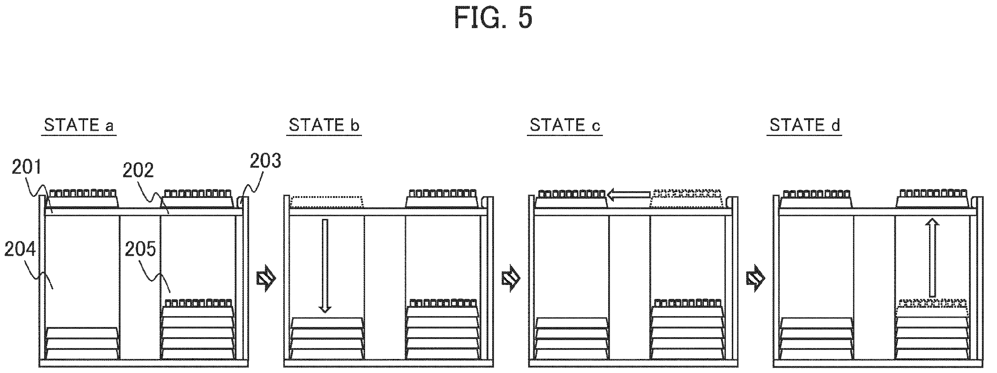

Next, the replacement process of the reaction vessel tray in this embodiment will be described. FIG. 5 illustrates the replacement process of the reaction vessel tray. Here, the reaction vessels are supplied to the automatic analyzer in a state in which they are housed in a reaction vessel tray and are managed based on the data of the identifier of the reaction vessel tray. In the following, an example is described in which an RFID is used as the identifier and an RFID reader-writer capable of reading and writing RFID is used as the identification section 203. The identifier (RFID) holds management information (management data) such as an ID uniquely identifying the reaction vessel tray, an expiration date associated with the ID, usage status (used/unused), and a code indicating authenticity. However, in cases where a non-writable identifier such as a barcode is used, or a non-writable RFID reader is used as the identification section 203, the control section 102 can manage the reaction vessel tray by associating the management information (management data) about the reaction vessel tray with the ID and storing it in the memory 5 in advance.

State a: State a is a state in which the reaction vessel tray at the use position 201 is being used.

State b: When the reaction vessels in the reaction vessel tray at the use position 201 are exhausted, the reaction vessel tray transfer mechanism disposes of the used reaction vessel tray into the reaction vessel tray disposal section 204. State b indicates a state in which the used reaction vessel tray has been disposed of.

State c: The reaction vessel tray transfer mechanism transfers the reaction vessel tray at the standby position 202 to the use position 201. Immediately before transferring the reaction vessel tray from the standby position 202, the identification section 203 rewrites the status stored in the identifier of the reaction vessel tray from "unused" to "used." State c indicates a state in which the reaction vessel tray has been transferred from the standby position 202 to the use position 201.

State d: The reaction vessel tray transfer mechanism supplies an unused reaction vessel tray from the reaction vessel tray supply section 205 to the standby position 202. At that time, the identifier of the reaction vessel tray at the standby position 202 is identified by the identification section 203, and the management information of the reaction vessel tray is confirmed. State d indicates a state in which a new reaction vessel tray has been transferred from the reaction vessel tray supply section 205 to the standby position 202.

The timing for supplying the reaction vessel tray to the standby position 202 is not particularly restricted. For example, the supply may be performed before the start of the analysis using the reaction vessel tray transferred to the use position 201, or it may be performed in parallel with the analysis using the reaction vessel of the reaction vessel tray transferred to the use position 201. However, in the latter case, it is desirable to supply a new reaction vessel tray to the standby position 202 while a sufficient number of reaction vessels remain in the reaction vessel tray at the use position 201.

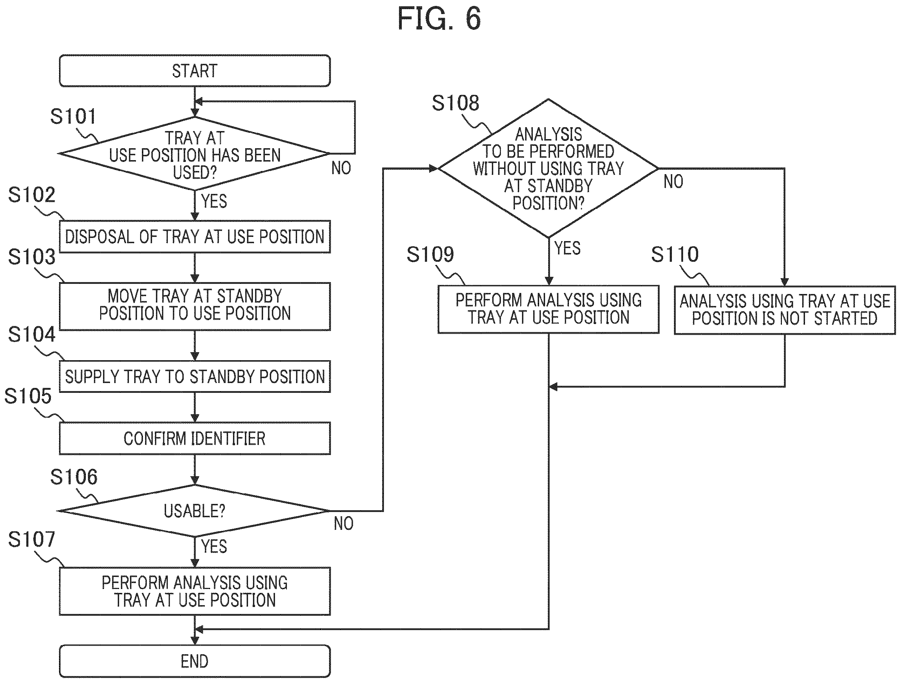

Next, the operation flow of the control section 102 when replacing the reaction vessel tray in this embodiment will be described. FIG. 6 represents a flowchart of operations of a control section when replacing the reaction vessel tray.

In Step S101, it is determined whether the reaction vessel tray at the use position 201 (hereinafter referred to as the "use position tray") has been used. If the use position tray is empty, or if the remaining number of reaction vessels housed in the use position tray is less than or equal to a predetermined number, it is determined to have been used. If it has been used, the process proceeds to Step S102; otherwise, the process returns to Step S101.

In Step S102, the used use position tray is discarded into the reaction vessel tray disposal section 204.

In Step S103, the reaction vessel tray at the standby position 202 (hereinafter referred to as the "standby position tray") is transferred to the use position 201. At this time, the identification section 203 rewrites the identifier by changing the status of the standby position tray from unused to used. If the identifier is not rewritable, and the management information of the reaction vessel tray is managed by the control section 102, then the status of the standby position tray in the memory 5 is rewritten from unused to used.

In Step S104, a new reaction vessel tray in the reaction vessel tray supply section 205 is supplied to the standby position 202.

In Step S105, the identifier of the new standby position tray at the standby position 202 is identified by the identification section 203, and it is determined whether the new standby position tray can be used. A determination that use is not permitted is made when the management information of the identifier of the new standby position tray, or the management information of the new standby position tray held by the control section 102, indicates that the new standby position tray is expired, already used, or unauthorized, etc.

If the usability determination result of the new standby position tray indicates that it can be used (Yes in Step S106), the process proceeds to Step S107. In Step S107, analysis is performed using the use position tray as usual in accordance with the analysis request. On the other hand, if the usability determination result of the new standby position tray indicates that it cannot be used (No in Step S106), the process proceeds to Step S108.

In Step S108, the control section 102, having received an analysis request, determines whether the analysis uses only the reaction vessels stored in the use position tray, or also requires the use of the reaction vessels stored in the standby position tray. The control section 102 may make this determination based on the number of reaction vessels remaining in the use position tray, the number of reaction vessels to be used in the analyses to be performed before the requested analysis, and the number of reaction vessels to be used in the requested analysis. If, as a result of the determination, the analysis uses only the reaction vessels stored in the use position tray, the analysis is performed (Step S109). On the other hand, if the analysis requires the use of the reaction vessels stored in the standby position tray as well, the analysis is not started using the reaction vessels stored in the use position tray (Step S109). For example, the analysis is not performed.

Until the use position tray is discarded, the determination in Step S108 is executed before starting each analysis. Further, when discarding the use position tray (Step S102), the standby position tray that was determined to be unusable is also discarded, and the reaction vessel tray transport mechanism supplies reaction vessel trays to both the use position 201 and the standby position 202 from the reaction vessel tray supply section 205.

As described above, according to this embodiment, when the reaction vessel tray installed at the standby position is determined to be unusable based on its management information, it is determined, before the start of the analysis, whether the reaction vessels to be used for the analysis are only those stored in the reaction vessel tray installed at the use position, or whether the analysis also requires the reaction vessels stored in the reaction vessel tray installed at the standby position. Then, the analysis is performed only if the reaction vessels to be used are those stored only in the reaction vessel tray installed at the use position. This makes it possible to avoid a situation in which an analysis started using the first reaction vessel is interrupted because the second reaction vessel cannot be used.

Although a preferred embodiment of the present invention has been described in this embodiment, the present invention is not limited thereto.

For example, when the standby position tray is determined to be unusable, a notification is given to the user, and if the user directly installs a new reaction vessel tray at the standby position 202 without using the reaction vessel tray transport mechanism, a determination based on the management information of the new reaction vessel tray is performed, and if it is determined to be usable, the analysis may be performed as usual (Step S107).

In addition, when the standby position tray is determined to be unusable, the following processing may be performed instead of Step S110. At the start of the analysis, the use position tray and the standby position tray are discarded into the reaction vessel tray disposal section 204 by the reaction vessel tray transport mechanism, and a reaction vessel tray is supplied from the reaction vessel tray supply section 205 to the standby position 202. The identification section 203 makes a determination on the new standby position tray, and if it is determined to be usable, the reaction vessel tray transport mechanism transfers the new standby position tray to the use position 201, and the analysis is started.

Also, when the standby position tray is determined to be unusable, instead of Step S110, the analysis may be performed using the reaction vessels stored in the standby position tray, and information indicating that a reaction vessel which was determined to be unusable was used in the analysis may be added to the analysis result. If the reason for unavailability is, for example, expiration, the analysis may be performed only in such cases, and the analysis result may be appended with information indicating that an expired reaction vessel was used.

It should be noted that the present invention is not limited to the embodiments described above, and includes various modifications. For example, the embodiments described above have been described in detail to simply describe the present invention, and are not necessarily required to include all the described configurations. In addition, part of the configuration of each of the embodiments can be subjected to addition, deletion, and replacement with respect to other configurations. For example, similar processing may also be performed on consumables other than reaction vessels, such as dispensing tips.

### List of Reference Signs

1: interface, 2: display, 3: keyboard, 4: microcomputer, 5: memory, 6: external storage, 7: printer, 8: sample introduction section, 9: column oven, 10 to 14: column, 20, 21: column selector valve, 22: detector, 23: analog/digital converter, 24: transport line, 25: sample dispensing mechanism, 26: reagent disk, 27: incubator, 28: reaction vessel tray mount section, 29: transport mechanism, 30: reagent dispensing mechanism, 31: magnetic particle stirring mechanism, 32: cleaning unit, 33: cleaning liquid nozzle, 34: chamber, 35: magnetic separator, 36: mixer, 37: elution unit, 38: supernatant separation unit, 39: liquid property regulation unit, 40: LC transfer mechanism, 41: reaction vessel disposal section, 100: automatic analyzer, 101: analysis section, 102: control section, 110: preprocessing section, 111: separation section, 112: detection section, 201: use position, 202: standby position, 203: identification section, 204: reaction vessel tray disposal section, 205: reaction vessel tray supply section, 301: sample introduction solvent, 302: solvent feed pump, 303: solvent selector valve, 304: injection valve, 305: sample loop, 306: sipper, 307: syringe

## Claims

1. An automatic analyzer comprising:
an analysis section for analyzing a sample using a consumable; and
a control section for controlling a sample analysis performed by the analysis section, wherein:
the consumable is held in a consumable storage vessel mount section of the analysis section while being stored in a consumable storage vessel attached with an identifier;
the consumable storage vessel mount section includes a first position and a second position, the consumable stored in the consumable storage vessel at the first position is used for the sample analysis, and when the consumable storage vessel at the first position has been used, the consumable storage vessel at the second position is transferred to the first position;
the consumable storage vessel mount section includes an identification section for identifying the identifier attached to the consumable storage vessel at the second position; and
when it is determined that the consumable stored in the consumable storage vessel at the second position is unusable based on an identification made by the identification section, the control section determines before starting the sample analysis whether it is possible to perform the sample analysis by using only the consumable stored in the consumable storage vessel at the first position, or it is necessary to use the consumables stored in the consumable storage vessels at the first and the second positions for performing the sample analysis.

2. The automatic analyzer according to claim 1, wherein when it is determined that it is possible to perform the sample analysis by using only the consumable stored in the consumable storage vessel at the first position, the control section starts the sample analysis, and when it is determined that it is necessary to use the consumables stored in the consumable storage vessels at the first and the second positions for performing the sample analysis, the control section does not start the sample analysis.

3. The automatic analyzer according to claim 1, wherein when it is determined that it is possible to perform the sample analysis by using only the consumable stored in the consumable storage vessel at the first position, the control section starts the sample analysis, and makes a disposal of the consumable storage vessels at the first and the second positions before starting the sample analysis.

4. The automatic analyzer according to claim 1, wherein:
the control section informs a user that the consumable stored in the consumable storage vessel at the second position is unusable based on the identification made by the identification section; and
when the user replaces the consumable storage vessel at the second position with a new consumable storage vessel, the control section identifies the replaced consumable storage vessel at the second position to determine whether or not the consumable storage vessel is usable.

5. The automatic analyzer according to claim 1, wherein:
the identifier holds at least an ID for uniquely identifying the consumable storage vessel; and
the control section determines whether or not the consumable stored in the consumable storage vessel is usable based on management information associated with the ID.

6. The automatic analyzer according to claim 5, wherein if it is determined, based on the management information, that the consumable storage vessel has its validity term expired, the consumable storage vessel has been already used, or the consumable storage vessel is not a normalized product, the control section determines that the consumable stored in the consumable storage vessel at the second position is unusable.

7. The automatic analyzer according to claim 5, wherein:
the management information contains a status of the consumable storage vessel; and
when the consumable storage vessel at the second position is transferred to the first position, the status of the consumable storage vessel contained in the management information is changed from unusable to usable.

8. The automatic analyzer according to any one of claims 1 to 7, wherein:
the consumable storage vessel mount section includes a consumable storage vessel supply section, a consumable storage vessel disposal section, and a consumable storage vessel transport mechanism; and
the consumable storage vessel transport mechanism transfers the consumable storage vessel at the first position to the consumable storage vessel disposal section, and transfers the consumable storage vessel at the second position to the first position, or transfers the consumable storage vessel of the consumable storage vessel supply section to the second position.

9. The automatic analyzer according to claim 8, wherein the consumable is a reaction vessel which receives dispensation of the sample, and a reagent to be reacted with the sample.
